# EUROPÄISCHE PATENTANMELDUNG

(11) **EP 4 316 866 A1**
(43) Veröffentlichungstag der Anmeldung: **07.02.2024**
(21) Anmeldenummer: 22188449.7
(22) Anmeldetag: 03.08.2022
(51) Int. Cl.: B60B 35/02, B60B 35/08, B60B 37/06, F16C 3/02

(54) **LEICHTBAU-RADSATZ FÜR EIN SCHIENENFAHRZEUG**

(71) Anmelder: Gschweitl, Ernst Dipl.-Ing., 8200 Albersdorf-Prebuch (AT)
(72) Erfinder: Gschweitl, Ernst Dipl.-Ing., 8200 Albersdorf-Prebuch (AT)
(74) Vertreter: Weiser & Voith Patentanwälte Partnerschaft

(57) **Zusammenfassung**

Ein Leichtbau-Radsatz (1) für ein Schienenfahrzeug hat zwei Räder (2), die über eine Hohlwelle (3) verbunden sind und jeweils einen Achsstummel (4) tragen, wobei jeder Achsstummel (4) über einen jeweiligen Satz (9) rund um die Achse (7) verteilter, das Rad (2) durchsetzender Schrauben (10) mit dem jeweiligen Ende (8) der Hohlwelle (3) in Verbindung steht, wobei die Hohlwelle (3) an jedem Ende (8) ein Gewinde (11) hat, mit dem jeweils ein Ring (12) verschraubt ist, an welchem der jeweilige Satz (9) von Schrauben (10) angreift, und wobei jeder Achsstummel (4) eine ringförmige Pressfläche (14) darbietet, die der Stirnfläche (15) des jeweiligen Hohlwellenendes (8) axial bezüglich des Rades (2) gegenüberliegt, um je einen axialen Presssitz (13) zwischen der Pressfläche (14) und dem Rad (2) einerseits und zwischen dem Rad (2) und der Stirnfläche (15) anderseits zu errichten.

## Beschreibung

Die vorliegende Erfindung betrifft einen Leichtbau-Radsatz für ein Schienenfahrzeug, mit zwei Rädern, die über eine Hohlwelle verbunden sind und der Hohlwelle abgewandt jeweils einen Achsstummel zur Lagerung am Schienenfahrzeug tragen, wobei die Räder, die Hohlwelle und die Achsstummel eine gemeinsame Achse haben, und wobei jeder Achsstummel über einen jeweiligen Satz rund um die Achse verteilter, das Rad durchsetzender Schrauben mit dem jeweiligen Ende der Hohlwelle in Verbindung steht.

Im modernen Bahnbau wird zunehmend angestrebt, die Masse des Schienenfahrzeugs zu reduzieren, insbesondere auch die ungefederte Masse seiner Radsätze, weil diese für den Fahrwegverschleiß besonders relevant ist und daher häufig in die Berechnung der Fahrwegbenützungsgebühren einfließt. Zu diesem Zweck wurden Leichtbau-Radsätze entwickelt, bei denen anstelle von Vollwellen Hohlwellen eingesetzt sind, mit welchen die Masse eines Radsatzes um bis zu 25% reduziert werden kann.

Da zur Gewichtseinsparung die Hohlwelle möglichst dünnwandig sein soll und anderseits der gesamte Radsatz den dynamisch wechselnden Biegemomenten im Betrieb möglichst gut standhalten soll, ist bei der Anbindung der Räder und Achsstummel an die Hohlwelle darauf zu achten, möglichst wenig lokales Biegemoment in die Hohlwelle und die Schrauben einzuleiten, um deren Materialermüdung zu verhindern. Im Stand der Technik wird dazu die Wandstärke der Hohlwelle an ihren Enden erhöht, um diese an ihren Stirnflächen mit den Achsstummeln besser verschrauben zu können. Zur Erhöhung der Wandstärke der Hohlwelle an den Enden kann die Hohlwelle entweder in ihrem mittleren Bereich innen- und außenseitig abgespant werden, was fertigungstechnisch aufwändig ist und einen hohen Materialverschnitt verursacht. Oder es wird an die Enden einer dünnwandig gefertigten Hohlwelle jeweils ein verdickter Endabschnitt angeschweißt, was eine zusätzliche Schwachstelle darstellt, die die Lebensdauer des Radsatzes signifikant beeinträchtigt.

Die Erfindung setzt sich um Ziel, einen verbesserten Leichtbau-Radsatz bereitzustellen, welcher einfach herzustellen ist und eine lange Lebensdauer hat.

Dieses Ziel wird mit einem Leichtbau-Radsatz der einleitend genannten Art erreicht, der sich erfindungsgemäß dadurch auszeichnet, dass die Hohlwelle an jedem Ende ein Gewinde hat, mit dem jeweils ein Ring verschraubt ist, an welchem der jeweilige Satz von Schrauben angreift, um die genannte Verbindung zu errichten, wobei jeder Achsstummel eine ringförmige Pressfläche darbietet, die der Stirnfläche des jeweiligen Hohlwellenendes axial bezüglich des Rades gegenüberliegt, um durch Festziehen der Schrauben je einen axialen Presssitz zwischen der Pressfläche und dem Rad einerseits und zwischen dem Rad und der Stirnfläche anderseits zu errichten.

Erfindungsgemäß wird die Hohlwelle mit dem jeweiligen Achsstummel über einen am jeweiligen Ende der Hohlwelle verschraubten Ring verbunden. Dadurch kann eine gesonderte Verstärkung der Enden der Hohlwelle, sei es durch Abspanen in der Mitte oder Anschweißen von Verdickungen, entfallen und die Hohlwelle mit weitgehend konstanter Wandstärke und damit besonders einfach hergestellt werden. Durch Festziehen der Schrauben werden die Hohlwelle und der jeweilige Achsstummel an ihren Stirn- und Pressflächen durch axiale Presssitze gehalten. Dadurch werden in die Hohlwelle und die Schrauben kaum oder nur sehr geringe lokale Biegemomente eingeleitet, sodass sie dauerhaft ohne Materialermüdung verwendet werden können. Aufgrund der Dünnwandigkeit der Hohlwelle und der damit sehr geringen Flächenausdehnung ihrer Stirnflächen - sowie der diesen axial gegenüberliegenden ringförmigen Pressflächen der Achsstummel - ergibt sich jeweils ein sehr hoher axialer Anpressdruck (Kraft/Fläche) des jeweiligen Presssitzes, sodass die Hohlwelle, Räder und Achsstummel kraftschlüssig in Radialrichtung fixiert sind.

In einer vorteilhaften Ausführungsform ist jeder Ring mit dem jeweiligen Hohlwellenende derart verschraubt, dass zwischen dem Ring und dem Rad ein axialer Spalt verbleibt. Dadurch kann die Hohlwelle alleine mit ihren Stirnflächen axial an den Rädern anliegen und so durch Festziehen der Schrauben ein besonders hoher Anpressdruck jeder Stirnfläche gegen das jeweilige Rad und damit ein besonders sicherer und fester radinnenseitiger Presssitz erzielt werden.

Ebenso ist es vorteilhaft, wenn jede Pressfläche durch einen ringförmigen Vorsprung am jeweiligen Achsstummel gebildet ist, so dass zwischen dem restlichen Achsstummel und dem Rad ein axialer Spalt verbleibt. Dadurch können die Achsstummel alleine mit ihren Pressflächen axial an den Rädern anliegen und wiederum durch Festziehen der Schrauben ein besonders hoher Anpressdruck jedes Achsstummels gegen das jeweilige Rad und damit wiederum ein besonders sicherer und fester radaußenseitiger Presssitz erzielt werden.

Die Stirn- und Pressflächen können jeweils glatt sein oder ein Profil aufweisen, z.B. kann jede Pressfläche und/oder Stirnfläche mit einer Riffelung oder mit konzentrischen Nuten, Riefen oder Rillen versehen sein. Wenn die jeweilige Press- bzw. Stirnfläche härter als das Rad ist, prägt sich das Profil in das Rad ein und nimmt so Radialkräfte durch Formschluss besonders gut auf. Wenn nicht, können nur die erhobenen Bereiche des Profils anliegen, wodurch sich die effektive Anpressfläche verringert, sodass sich der lokale Anpressdruck erhöht und die Radialkräfte durch erhöhten Kraftschluss besonders gut aufgenommen werden. Optional kann jedes Rad für die jeweilige Press- bzw. Stirnfläche ein dazu komplementäres Profil aufweisen, um einen Formschluss der Fläche am Rad zu errichten.

Die Schrauben können auf vielerlei Weise die Hohlwelle über die Schrauben mit den Achsstummeln verbinden, z.B. können sie dabei die Räder sogar schräg durchsetzen. In einer bevorzugten Ausführungsform verlaufen die Schrauben jedoch parallel zur Achse. Auf diese Weise können die gesamte Vorspannkraft der Schrauben für die axiale Anpresskraft der Stirn- und Pressflächen verwendet und so besonders feste und sichere Presssitze erhalten werden. Darüberhinaus kann eine Einleitung von Radialkräften auf die Hohlwelle, Räder und Achsstummel verringert bzw. vermieden werden.

Die Schrauben eines Satzes können z.B. in Gruppen symmetrisch um die Achse angeordnet sein. In einer bevorzugten Ausführungsform sind die Schrauben jedes Satzes regelmäßig um die Achse verteilt. Dies ergibt eine besonders homogene Kräfteverteilung um die gemeinsame Achse.

Jeder Satz kann eine beliebige Anzahl an Schrauben haben. Günstig ist es, wenn jeder Satz 8 bis 48, bevorzugt 12 bis 36, besonders bevorzugt 16 bis 24, Schrauben hat. Die Verwendung vieler kleindurchmessriger Schrauben reduziert die über den Umlauf eines Rades auftretende Variation von Kräften und Momenten in den Schrauben und der gesamten Hohlwellenanbindung und damit die Belastung und den Verschleiß aller Elemente.

Die Schrauben können an sich beliebiger Art sein, z.B. Gewindestangen, die sowohl den Ring als auch den Achsstummel durchsetzen und über Muttern an deren Enden festgezogen werden. Besonders günstig ist es, wenn die Schrauben Kopfschrauben sind, die mit ihren Köpfen an der dem Rad abgewandten Seite des Achsstummels angreifen und in Gewindebohrungen des Rings eingeschraubt sind. Die Schraubenköpfe sind auf der dem Rad abgewandten Seite des Achsstummels besonders einfach von außen für die Montage zugänglich.

Grundsätzlich kann jeder Ring auf der Außenseite oder auf der Innenseite der Hohlwelle mit dieser verschraubt sein, also ein Außenring mit Innengewinde oder ein Innenring mit Außengewinde sein, und das jeweilige Hohlwellenende ein dazu korrespondierendes Außen- bzw. Innengewinde haben. Im ersten Fall lässt sich der Ring besonders leicht ergreifen und bedienen, im zweiten Fall wird ein besonders schlanker Aufbau des Radsatzes erreicht.

Auch eine Ausführungsform mit sowohl einem Außenring als auch einem Innenring pro Wellenende ist möglich. D.h. im Fall von Außenringen hat die Hohlwelle optional an jedem Ende auch ein Innengewinde, in das jeweils ein weiterer (Innen-)Ring mit einem Außengewinde unter Bildung eines Spaltes zwischen weiterem (Innen-)Ring und Rad eingeschraubt ist, wobei der jeweilige Satz von Schrauben auch an diesem weiteren (Innen-)Ring angreift. Damit wird jedes Ende der Hohlwelle innerhalb und außerhalb der Hohlwelle über Schrauben mit dem jeweiligen Achsstummel und somit besonders fest und gleichmäßig unter Ausrichtung der Press- und Stirnflächen verbunden. Insbesondere kann damit eine Einleitung von lokalen Radialkräften oder lokalen Biegemomenten auf die Hohlwelle besonders gut vermieden werden, wodurch diese besonders dünnwandig und leicht sein kann.

In einer bevorzugten Ausführungsform hat jeder Achsstummel einen Flansch, an dem der jeweilige Satz von Schrauben angreift und auf dem sich die Pressfläche befindet.

In einer vorteilhaften Ausführungsform ist jeder Achsstummel durch ein Rohrstück, sei es mit oder ohne Flansch, gebildet. Auf diese Weise kann - verglichen mit vollen, d.h. stabförmigen, Achsstummeln - zusätzlich Masse eingespart und das Gesamtgewicht des Radsatzes weiter reduziert werden.

Weiters ist es günstig, wenn jedes Rad auf der der Hohlwelle zugewandten Seite einen vorspringenden Absatz zur radialen Abstützung des Hohlwellenendes bei der Montage hat. Die Hohlwelle kann so an den Absätzen der Räder aufliegend mit den Achsstummeln verschraubt werden. Nach der Montage wird die Hohlwelle wie oben beschrieben durch die Presssitze gehalten, sodass die Einleitung von lokalen radialen Kräften bzw. lokalen Biegemomenten durch die Absätze vernachlässigt bzw. im verschraubten Zustand sogar ein radiales Spiel belassen werden kann.

Um die Montage der Achsstummel zu vereinfachen, kann in einer ersten Variante jedes Rad mit einer Aussparung versehen werden, in welcher bei der Montage ein vorspringender Absatz des jeweiligen Achsstummels am Rad abstützbar ist. So kann jeder Achsstummel mit seinem Absatz in das zugehörige Rad eingeführt und dann über die Schrauben mit dem jeweiligen Hohlwellenende verbunden werden. In einer zweiten Variante kann jeder Achsstummel eine Aussparung haben, in welcher bei der Montage ein vorspringender Absatz des jeweiligen Rades am Achsstummel abstützbar ist. Dabei kann jeder Achsstummel mit seiner Aussparung über den Absatz des zugehörigen Rades geschoben werden, ehe er dann über die Schrauben mit dem jeweiligen Hohlwellenende verbunden wird.

Die Erfindung wird nachfolgend anhand von in den beigeschlossenen Zeichnungen dargestellten Beispielen näher erläutert. In den Zeichnungen zeigt:
Fig. 1 einen erfindungsgemäßen Leichtbau-Radsatz in einer Seitenansicht;
Fig. 2 den Radsatz von Fig. 1 in einer Stirnansicht;
Fig. 3 eine erste Ausführungsform des Radsatzes der Fig. 1 und 2 in einem ausschnittsweisen Längsschnitt;
Fig. 4 das Detail IV von Fig. 3 in vergrößertem Maßstab;
Fig. 5 eine zweite Ausführungsform des Radsatzes der Fig. 1 und 2 in einem ausschnittsweisen Längsschnitt; und
Fig. 6 das Detail VI von Fig. 5 in vergrößertem Maßstab.

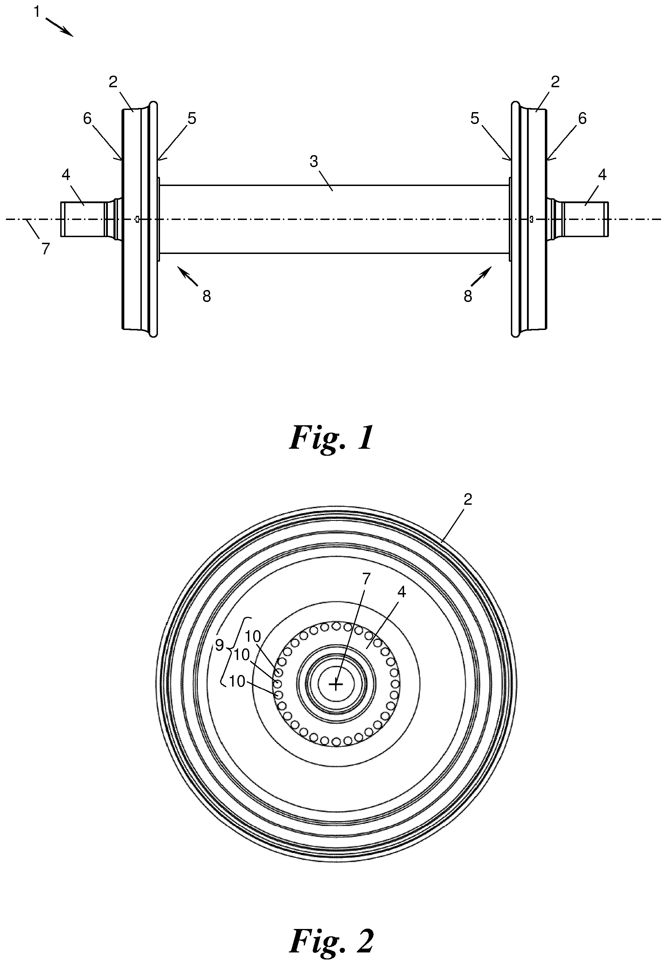

In den Fig. 1 und 2 ist ein Leichtbau-Radsatz 1 für ein Schienenfahrzeug, z.B. einen Zug oder Güterwaggon, dargestellt. Der Radsatz 1 hat zwei Räder 2, eine Hohlwelle 3 und zwei Achsstummel 4 zur Lagerung in entsprechenden radaußenseitigen Lagern (nicht gezeigt) des Schienenfahrzeugs. Die Räder 2 sind an ihren Innenseiten 5 über die Hohlwelle 3 miteinander verbunden und tragen jeweils auf ihrer der Hohlwelle 3 abgewandten (Außen-)Seite 6 einen der Achsstummel 4. Die Räder 2, die Hohlwelle 3 und die Achsstummel 4 haben eine gemeinsame zentrale Achse 7. Die Hohlwelle 3 kann von einem Motor angetrieben sein, z.B. über eine darauf sitzende Antriebsscheibe (nicht gezeigt), der Radsatz 1 also einen Treibradsatz bilden, oder antriebslos sein, der Radsatz 1 also einen Laufradsatz bilden.

In den Fig. 2 - 6 ist nur die linke Seite des Radsatzes 1 dargestellt. Es versteht sich, dass die folgenden Ausführungen selbstverständlich gleichermaßen für die rechte (nicht dargestellte) Seite des Radsatzes 1 gelten.

Wie z.B. in den Fig. 2 - 4 für die linke Seite des Radsatzes 1 gezeigt, steht jeder Achsstummel 4 mit einem Ende 8 der Hohlwelle 3 in Verbindung. Dazu ist jeder Achsstummel 4 mit der Hohlwelle 3 über einen jeweiligen Satz 9 von Schrauben 10, welche rund um die Achse 7 verteilt sind und das jeweilige Rad 2 durchsetzen, unter Zwischenlegung des jeweiligen Rades 2 verbunden. Um die Verbindung zu errichten, hat die Hohlwelle 3 an jedem Ende 8 ein Gewinde 11 und einen mit dem Gewinde 11 verschraubten Ring 12, an welchem die Schrauben 10 des jeweiligen Satzes 9 angreifen, z.B. mit ihren Köpfen oder Gewinden, wie weiter unten im Detail ausgeführt.

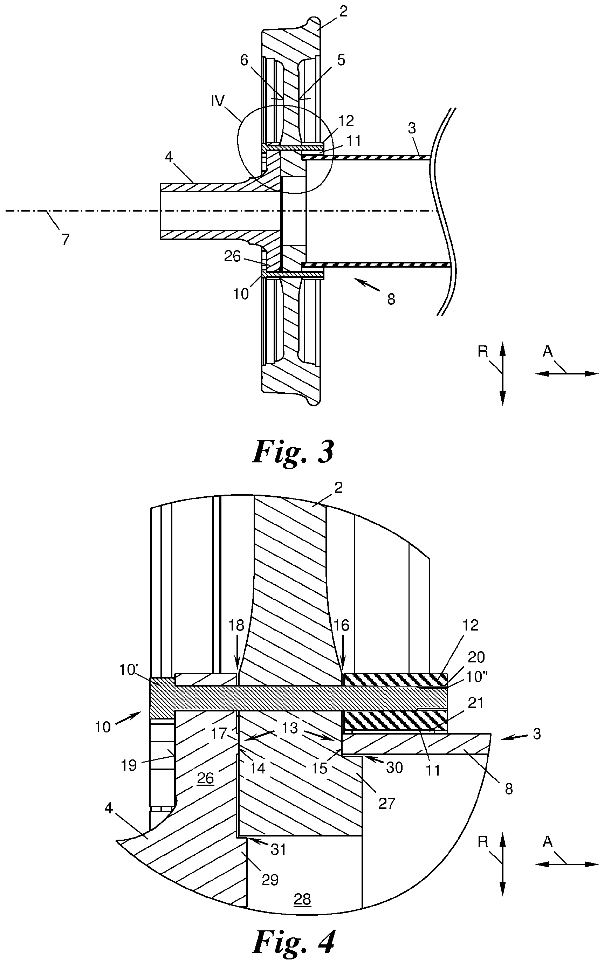

Die Achsstummel 4 und die Hohlwelle 3 werden jeweils über axiale Presssitze 13 am Rad 2 gehalten. Zu diesem Zweck bietet jeder Achsstummel 4 eine ringförmige Pressfläche 14 dar, welche der Stirnfläche 15 des Endes 8 der Hohlwelle 3 in einer der Achse 7 parallelen Axialrichtung A bezüglich des Rades 2 gegenüberliegt. Die Pressfläche 14 und die Stirnfläche 15 liegen also in Radialrichtung R in gleichem Abstand von der Achse 7 und sind bevorzugt von gleicher Flächenausdehnung, d.h. in Axialrichtung A gesehen kongruent. Dadurch wird bei Festziehen der Schrauben 10 einerseits die Pressfläche 14 des Achsstummels 4 axial gegen das Rad 2 (in Fig. 4: nach rechts) gepresst, um den einen (in Fig. 4: linken) Presssitz 13 zu errichten; andererseits wird die Stirnfläche 15 des Hohlwellenendes 8 axial gegen das Rad 2 (in Fig. 4: nach links) gepresst, um den anderen (in Fig. 4: rechten) der Presssitze 13 zu errichten. Durch den axialen Anpressdruck der Presssitze 13 werden die Hohlwelle 3 und die Achsstummel 4 somit kraftschlüssig über die Reibkräfte an den Rädern 2 auch in Radialrichtung R fixiert.

Je nach axialer Anlagefläche des Achsstummels 4 einerseits bzw. des Hohlwellenendes 8 und Ringes 12 andererseits wird ein größerer oder kleinerer Anpressdruck der Presssitze 13 erzeugt. Die Fig. 3 - 6 zeigen Ausführungsformen, in welchen zur Steigerung des Anpressdrucks ausschließlich die Press- und Stirnflächen 14, 15 axial am Rad 2 anliegen:
Dazu ist - auf den Innenseiten 5 der Räder 2 - jeder Ring 12 unter Bildung eines axialen Spalts 16 mit dem jeweiligen Ende 8 der Hohlwelle 3 verschraubt. Zwischen Ring 12 und Rad 2 verbleibt also der Spalt 16, sodass das Anziehmoment der Schrauben 10 gänzlich in den Anpressdruck für die radinnenseitigen Presssitze 13 übersetzt wird.

Zum selben Zweck ist - auf den Außenseiten 6 der Räder 2 - jede Pressfläche 14 durch einen ringförmigen Vorsprung 17 am jeweiligen Achsstummel 4 gebildet. Dadurch liegt nur der Vorsprung 17 mit der Pressfläche 14 axial am Rad 2 an und es verbleibt zwischen dem restlichen Achsstummel 4 und dem Rad 2 ein axialer Spalt 18. Infolgedessen wird auch radaußenseitig das Anziehmoment der Schrauben 10 gänzlich in den Anpressdruck der Presssitze 13 übersetzt. Selbstverständlich können in alternativen Varianten weitere Teile des Achsstummels 4 und/oder des Rings 12 am Rad 2 anliegen, falls gewünscht.

Um den Presssitz 13 der Pressfläche 14 zu verstärken, kann diese optional mit einem Profil, z.B. einer Riffelung oder mit konzentrischen Nuten, Riefen oder Rillen, versehen sein. Ist die Pressfläche 14 härter als das Rad 2, wird diese mit ihrem Profil geringfügig in das Rad 2 eindringen und dadurch den radialen Sitz am Rad 2 verstärken. Kann die Pressfläche 14 nicht in das Rad 2 eindringen, liegen nur die erhabenen Teile des Profils der Pressfläche 14 axial am Rad 2 an, was wiederum den Anpressdruck (Kraft/Fläche) erhöht und ebenso den radialen Sitz am Rad 2 verstärkt. Zusätzlich oder alternativ dazu kann auch die Stirnfläche 15 mit einem solchen Profil, z.B. einer Riffelung oder mit konzentrischen Nuten, Riefen oder Rillen, versehen sein, um die gleichen Wirkungen am rechten Presssitz 13 zu erzielen. Ferner kann jedes Rad 2 optional ein zum genannten Profil der Press- bzw. Stirnfläche 14, 15 komplementäres Profil aufweisen.

Die Schrauben 10 können auf beliebige Art ausgeführt sein und in beliebiger Weise zwischen Achsstummel 4 und Ring 12 wirken, um die Presssitze 13 zu errichten. In den gezeigten Ausführungsformen sind die Schrauben 10 Kopfschrauben, deren Köpfe 10' an der dem Rad 2 abgewandten Seite 19 des Achsstummels 4 angreifen und deren Gewindeabschnitte 10" in Gewindebohrungen 20 des Ringes 12 eingeschraubt sind. Alternativ dazu könnte der Achsstummel 4 Gewindebohrungen zum Einschrauben der Gewindeabschnitte 10" aufweisen und die Köpfe 10' an der dem Rad 2 abgewandten Stirnseite des Rings 12 angreifen (nicht gezeigt).

In den gezeigten Ausführungsformen verlaufen alle Schrauben 10 in Axialrichtung A parallel zur Achse 7 und sind in regelmäßigen Winkelabständen um die Achse 7 verteilt. Optional könnten einige oder alle Schrauben 10 schräg zur Achse 7 verlaufen und/oder unregelmäßig um die Achse 7 verteilt sein.

Jeder Satz 9 kann eine beliebige Anzahl an Schrauben 10 haben. Eine größere Anzahl kleindurchmessriger Schrauben 10 ergibt eine geringere mechanische Belastung im Betrieb. Insbesondere kann jeder Satz 9 im Bereich von 8 bis 48, bevorzugt 12 bis 36, besonders bevorzugt 16 bis 24, Schrauben 10 haben.

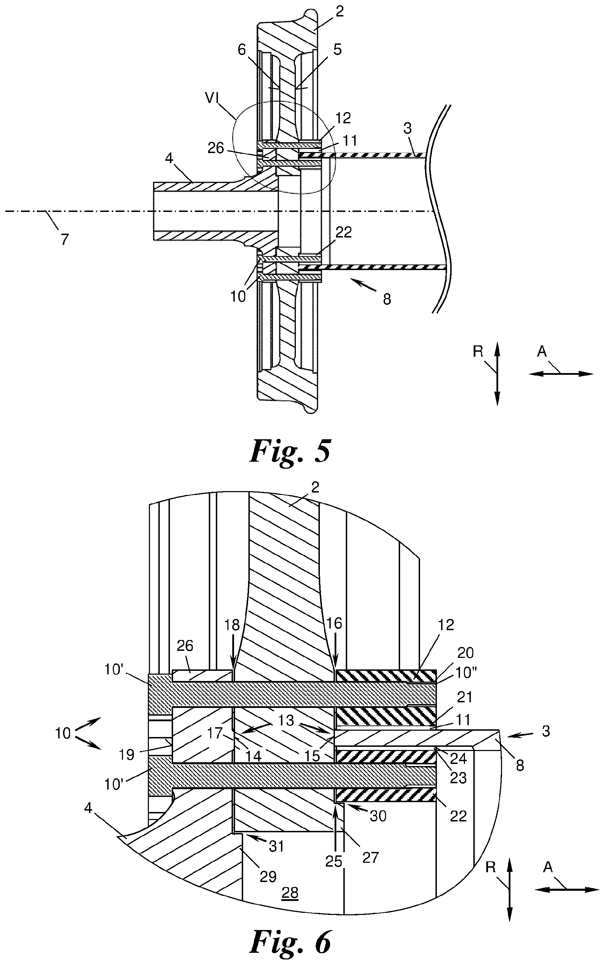

Die Fig. 3 und 4 zeigen eine erste und die Fig. 5 und 6 eine zweite Ausführungsform der Verbindung der Hohlwelle 3 mit dem jeweiligen Achsstummel 4.

In der Ausführungsform der Fig. 3 und 4 hat jeder Ring 12 ein Innengewinde 21 und das Gewinde 11 jedes Hohlwellenendes 8 ist ein dazu korrespondierendes Außengewinde. Der Ring 12 ist damit ein Außenring, der auf die Hohlwelle 3 aufgeschraubt ist.

In einer alternativen Ausführungsform könnte der Ring 12 ein Innenring sein, der in die Hohlwelle 3 eingeschraubt ist, d.h. der Ring 12 dann ein Außengewinde haben und das Gewinde 11 der Hohlwelle 3 ein Innengewinde sein (nicht gezeigt).

Die Fig. 5 und 6 zeigen eine weitere Ausführungsform mit sowohl dem (hier: Außen-)Ring 12 als auch einem weiteren (hier: Innen-)Ring 22. Der weitere Ring 22 hat dazu ein Außengewinde 23 und das zugehörige Hohlwellenende 8 ein Innengewinde 24. Der jeweilige Satz 9 von Schrauben 10 greift an beiden Ringen 12, 22 an, um die Presssitze 13 zu errichten. Dabei verbleibt im eingeschraubten Zustand auch zwischen dem inneren Ring 22 und dem Rad 2 ein axialer Spalt 25, sodass nur die jeweilige Stirnfläche 15 an der Innenseite 5 des Rades 2 zur Anlage kommt.

Die Achsstummel 4 können beliebige Form haben und zur Gewichtsreduktion beispielsweise durch ein Rohrstück gebildet sein. Für den Angriff der Schrauben 10 kann jeder Achsstummel 4 einen Flansch 26 aufweisen, auf dem sich auch die Pressfläche 14 befindet. Der Flansch 26 kann einstückig mit dem Achsstummel 4 ausgeformt oder als separater Bauteil angeflanscht sein. In alternativen Ausführungsformen kann jeder Achsstummel 4 ohne Flansch 26 mit dem jeweiligen Ring 12 bzw. 22 verbunden sein, z.B. über dem Rad 2 zugewandte Gewindebohrungen im Achsstummel 4, in welche der jeweilige Satz 9 von Schrauben 10 eingreift.

Die Fig. 4 und 6 illustrieren optionale Montagehilfen für die Montage der Hohlwelle 3 und der Achsstummel 4. So kann jedes Rad 2 z.B. einen von der Innenseite 5 vorspringenden Absatz 27 haben, auf dem die Hohlwelle 3 (Fig. 4) oder der bereits mit der Hohlwelle 3 verschraubte innere Ring 22 (Fig. 6) bei der Montage vor Errichten der Presssitze 13 abgestützt werden kann.

Um den Achsstummel 4 bei der Montage vor Errichten der Presssitze 13 abzustützen, kann jedes Rad 2 auch eine Aussparung 28 zur Aufnahme eines vorspringenden Absatzes 29 des Achsstummels 4 haben. Alternativ könnte jeder Achsstummel 4 eine Aussparung zur Aufnahme eines vorspringenden Absatzes des Rades 2 haben.

Nach Errichten der Presssitze 13 wie oben beschrieben werden sämtliche Radialkräfte von diesen aufgenommen, sodass zwischen dem Absatz 27 jedes Rades 2 und der Hohlwelle 3 bzw. dem Ring 22 sowie zwischen dem Absatz 29 jedes Achsstummels 4 und dem Rad 2 optional jeweils ein radialer Spalt 30, 31 verbleiben kann.

Die Erfindung ist nicht auf die dargestellten und beschriebenen Ausführungsbeispiele beschränkt, sondern umfasst alle Varianten, Modifikationen und deren Kombinationen, die in den Rahmen der angeschlossenen Ansprüche fallen.

## Patentansprüche

1. Leichtbau-Radsatz für ein Schienenfahrzeug, mit zwei Rädern (2), die über eine Hohlwelle (3) verbunden sind und der Hohlwelle (3) abgewandt jeweils einen Achsstummel (4) zur Lagerung am Schienenfahrzeug tragen, wobei die Räder (2), die Hohlwelle (3) und die Achsstummel (4) eine gemeinsame Achse (7) haben, und wobei jeder Achsstummel (4) über einen jeweiligen Satz (9) rund um die Achse (7) verteilter, das Rad (2) durchsetzender Schrauben (10) mit dem jeweiligen Ende (8) der Hohlwelle (3) in Verbindung steht, **dadurch gekennzeichnet, dass** die Hohlwelle (3) an jedem Ende (8) ein Gewinde (11) hat, mit dem jeweils ein Ring (12) verschraubt ist, an welchem der jeweilige Satz (9) von Schrauben (10) angreift, um die genannte Verbindung zu errichten, wobei jeder Achsstummel (4) eine ringförmige Pressfläche (14) darbietet, die der Stirnfläche (15) des jeweiligen Hohlwellenendes (8) axial bezüglich des Rades (2) gegenüberliegt, um durch Festziehen der Schrauben (10) je einen axialen Presssitz (13) zwischen der Pressfläche (14) und dem Rad (2) einerseits und zwischen dem Rad (2) und der Stirnfläche (15) anderseits zu errichten.

2. Radsatz nach Anspruch 1, **dadurch gekennzeichnet, dass** jeder Ring (12) mit dem jeweiligen Hohlwellenende (8) derart verschraubt ist, dass zwischen dem Ring (12) und dem Rad (2) ein axialer Spalt (16) verbleibt.

3. Radsatz nach Anspruch 1 oder 2, **dadurch gekennzeichnet, dass** jede Pressfläche (14) durch einen ringförmigen Vorsprung (17) am jeweiligen Achsstummel (4) gebildet ist, so dass zwischen dem restlichen Achsstummel (4) und dem Rad (2) ein axialer Spalt (18) verbleibt.

4. Radsatz nach einem der Ansprüche 1 bis 3, **dadurch gekennzeichnet, dass** jede Pressfläche (14) und/oder Stirnfläche (15) mit einer Riffelung oder mit konzentrischen Nuten, Riefen oder Rillen versehen ist.

5. Radsatz nach Anspruch 4, **dadurch gekennzeichnet, dass** jedes Rad (2) für die jeweilige Press- bzw. Stirnfläche (14, 15) ein dazu komplementäres Profil aufweist.

6. Radsatz nach einem der Ansprüche 1 bis 5, **dadurch gekennzeichnet, dass** die Schrauben (10) parallel zur Achse (7) verlaufen.

7. Radsatz nach einem der Ansprüche 1 bis 6, **dadurch gekennzeichnet, dass** die Schrauben (10) jedes Satzes (9) regelmäßig um die Achse (7) verteilt sind.

8. Radsatz nach einem der Ansprüche 1 bis 7, **dadurch gekennzeichnet, dass** jeder Satz (9) 8 bis 48, bevorzugt 12 bis 36, besonders bevorzugt 16 bis 24, Schrauben (10) hat.

9. Radsatz nach einem der Ansprüche 1 bis 8, **dadurch gekennzeichnet, dass** die Schrauben (10) Kopfschrauben sind, die mit ihren Köpfen (10') an der dem Rad (2) abgewandten Seite (19) des Achsstummels (4) angreifen und in Gewindebohrungen (21) des Rings (2) eingeschraubt sind.

10. Radsatz nach einem der Ansprüche 1 bis 9, **dadurch gekennzeichnet, dass** jeder Ring (12) ein Innengewinde (21) und jedes Hohlwellenende (8) ein dazu korrespondierendes Außengewinde (11) hat.

11. Radsatz nach Anspruch 10, **dadurch gekennzeichnet, dass** die Hohlwelle (3) an jedem Ende (8) auch ein Innengewinde (24) hat, in das jeweils ein weiterer Ring (22) mit einem Außengewinde (23) unter Bildung eines Spaltes (25) zwischen weiterem Ring (22) und Rad (2) eingeschraubt ist, wobei der jeweilige Satz (9) von Schrauben (10) auch an diesem weiteren Ring (22) angreift.

12. Radsatz nach einem der Ansprüche 1 bis 11, **dadurch gekennzeichnet, dass** jeder Achsstummel (4) einen Flansch (26) hat, an dem der jeweilige Satz (9) von Schrauben (10) angreift und auf dem sich die Pressfläche (14) befindet.

13. Radsatz nach einem der Ansprüche 1 bis 12, **dadurch gekennzeichnet, dass** jeder Achsstummel (4) durch ein Rohrstück gebildet ist.

14. Radsatz nach einem der Ansprüche 1 bis 13, **dadurch gekennzeichnet, dass** jedes Rad (2) auf der der Hohlwelle (3) zugewandten Seite (5) einen vorspringenden Absatz (27) zur radialen Abstützung des Hohlwellenendes (8) bei der Montage hat.

15. Radsatz nach einem der Ansprüche 1 bis 14, **dadurch gekennzeichnet, dass** jedes Rad (2) eine Aussparung (28) hat, in welcher bei der Montage ein vorspringender Absatz (29) des jeweiligen Achsstummels (4) am Rad abstützbar ist, oder
dass jeder Achsstummel (4) eine Aussparung hat, in welcher bei der Montage ein vorspringender Absatz des jeweiligen Rades (2) am Achsstummel (4) abstützbar ist.
